# EUROPÄISCHE PATENTSCHRIFT

(11) **EP 1 130 458 B1**
(45) Veröffentlichungstag und Bekanntmachung des Hinweises auf die Patenterteilung: **16.05.2007**
(21) Anmeldenummer: 01104903.8
(22) Anmeldetag: 28.02.2001
(51) Int. Cl.: G03B 21/62

(54) **Durchlicht-Projektionswand**
Rear projection screen
Ecran à rétroprojection

(30) Priorität: 02.03.2000 DE 20003848 U
(43) Veröffentlichungstag der Anmeldung: 05.09.2001
(73) Patentinhaber: Bauglasindustrie Gesellschaft mit beschränkter Haftung, 66839 Schmelz/Saar (DE)
(72) Erfinder: Braun, Thomas, 66265 Heusweiler (DE)
(74) Vertreter: Tönhardt, Marion

(56) Entgegenhaltungen:
- DE-A- 1 784 056
- US-A- 4 135 784
- US-A- 4 379 628

## Beschreibung

Die Erfindung betrifft eine Durchlicht-Projektionswand mit einer zwischen einem Projektor und dem Beobachter angeordneten transluziden Abbildungsfläche.

Die Abbildungsfläche dient zum Sichtbarmachen eines von Steh- oder Laufbild-Projektoren erzeugten virtuellen Bildes. Um eine Beobachtung des Bildes von der dem Projektor abgewandten Seite zu ermöglichen, muß die Durchlicht-Projektionswand lichtdurchlässig sein und eine Lichtstreuung bewirken.

Durchlicht-Projektionswände sind im Bereich der Werbung und Information in vielfältiger Weise bekannt. Sie können nach DE 80 26 773 U1 in ihrer einfachsten Form aus einer sandgestrahlten Mattscheibe aus Glas bestehen. Ihre größtmöglichen Abmessungen sind konstruktionsbedingt beschränkt. Zwar könnten grundsätzlich großflächige Durchlicht-Projektionswände erstellt werden, bei denen die Abbildungsfläche aus mehreren übereinander und/oder nebeneinander angeordneten Mattglasscheiben besteht. Derartige Durchlicht-Projektionswände sind jedoch bislang nicht bekannt geworden. Sie wären auch nur mit großem konstruktiven Aufwand herstellbar. Die auf ein derartiges Bauwerk wirkende Windlast würde eine so robuste Tragkonstruktion benötigen, daß die Qualität der Bildprojektion erheblich beeinträchtigt wäre. Zudem setzt eine Sandstrahlmattierung die Festigkeit von Glas herab, was bei großflächigen Durchlicht-Projektionswänden aus einer Vielzahl von sandgestrahlten Glas-Mattscheiben zusätzlich zu Stabilitätsproblemen führen würde.

Eine Aufgabe der Erfindung ist es, ein System aus einer Durchlicht-Projektionswand mit einer transluziden Abbildungsfläche und einem Projektor anzugeben, bei dem die Durchlicht-Projektionswand großflächig ist, im Außenbereich einsetzbar und eine Bildprojektion mit ausreichend hoher Qualität gestattet und mit wenig Aufwand herstellbar ist sowie vor einem Gebäude, wie z. B. einem Großraumkino auf große Distanz erkennbare Bilder projizieren kann. Eine weitere Aufgabe der Erfindung ist es, ein Verfahren zum Sichtbarmachen eines von Steh- oder Laufbild-Projektoren erzeugten virtuellen Bildes anzugeben für eine großflächige Durchlicht-Projektionswand.

Erfindungsgemäß ist vorgesehen, daß bei einem System aus einer Durchlicht-Projektionswand mit einer transluziden Abbildungsfläche und einem Projektor die Abbildungsfläche von lichtstreuenden Eigenschaften aufweisenden Stegen einer Vielzahl nebeneinander angeordneter U-Profil-Bauelemente gebildet ist.

Bei der Einstellung der lichtstreuenden Eigenschaften der Stege der U-Profil-Bauelemente im Rahmen der Erfindung kann auf die allgemeinen Kenntnisse zu Durchlicht-Projektionswänden zurückgegriffen werden. Vorzugsweise beträgt die Lichttransmission T_{L} der Stege (bei senkrechtem Lichteinfall) mindestens etwa 50 % bei einem für die Durchlichtprojektion ausreichend hohen Streulichtanteil des durchgelassenen Lichtes. Wenn eine Betrachtung des dargestellten Bildes aus einem großen Winkelbereich ermöglicht werden soll, so ist die Lichtstreuung möglichst gleichmäßig über den gesamten Bereich von 0 bis 180 ° einzustellen. Soll hingegen das Bild von einer bestimmten Beobachterposition aus besonders gut sichtbar sein, so wird darauf zu achten sein, daß die Lichtstreuwirkung in die betreffende Richtung höher ist als in andere Richtungen.

Es versteht sich, daß die Stege nicht über ihre gesamte Breite und Höhe lichtstreuende Eigenschaften haben müssen. Vielmehr reicht es meistens aus, wenn der überwiegende Teil der Stege mit lichtstreuenden Eigenschaften ausgestattet ist.

Ganz bevorzugt bestehen die U-Profil-Bauelemente aus Glas. U-Profil-Bauglaselemente bestehen üblicherweise aus einem Alkali-Kalk-Silikat-Glas, das wie Gußglas im Maschinenwalzverfahren in seine U-Profil-Form gebracht wird. Es ist durchscheinend, mit einer produktionsbedingt unregelmäßigen oder ornamentierten Oberfläche und weist insgesamt gußglastypische Qualitätsmerkmale auf. Die Lichttransmission für handelsübliche, einschalig verlegte U-Profil-Bauglaselemente ohne lichtstreuende Eigenschaften beträgt bis zu 89 %, für zweischalig verlegte U-Profilbauglaselemente liegt sie bei bis zu 81 %. Es versteht sich, daß die Lichtstreuung der Stege der erfindungsgemäßen U-Profil-Bauglaselemente erheblich höher sein muß als bei handelsüblichen U-Profil-Bauglaselementen mit oder ohne Omamentierung.

Unter lichtstreuenden Eigenschaften wird im Rahmen der Erfindung verstanden, daß nur ein geringer Anteil, bevorzugt weniger als 10 %, des durchgelassenen Lichts keine Ablenkung erfährt. Die für eine Durchlicht-Projektion geeigneten lichtstreuenden Strukturen (Oberflächenaufrauhungen, Mattierungen, lichtstreuende Beschichtungen, innere Strukturen oder dergleichen) müssen Abmessungen im Mikrometerbereich aufweisen. Typischerweise liegen diese im Bereich von 1 bis 100 Mikrometer, vorzugsweise bei etwa 50 Mikrometern. Derartig strukturierte Flächen wirken im Auflicht matt und bei hoher Intensität des einfallenden Lichts praktisch lichtundurchlässig.

Handelsübliche U-Profil-Bauglaselemente werden in einer Dicke von 6 oder 7 mm, mit einer Länge bis zu 7000 mm, mit einer Stegbreite von 232 bis 498 mm und mit einer Flanschhöhe von 41 oder 60 mm hergestellt. U-Profil-Bauglaselemente sind besonders witterungsbeständig und unempfindlich gegen aggressive Luft in Industrie- und Küstengebieten.

Die Verwendung von U-Profil-Bauglaselementen mit erhöhter Lichtstreuwirkung zum Aufbau von Gebäudewänden ist bereits aus der DE 17 84 056 A1 bekannt. Dort werden zu Zwekken der Wärmedämmung die U-Profil-Bauglaselemente mit Glasgespinsten oder Kapillarplatten oder mit Folien mit hoher Reflexionskraft und Lichtfilterung kombiniert. Mit diesen Maßnahmen soll außerdem eine ausreichende Streuung des von außen einfallenden Lichtes bewirkt werden, so daß eine gleichmäßige Raumausleuchtung mit Tageslicht bewirkt wird.

Überraschenderweise stören bei der Verwirklichung der Erfindung die üblicherweise senkrecht zu den Stegen und damit im wesentlichen parallel zur Projektionsrichtung ausgerichteten Flansche der U-Profil-Bauelemente bei der Bildprojektion nur unerheblich. Dabei versteht sich von selbst, daß bei im Rahmen der Erfindung einsetzbaren U-Profil-Bauelementen die Dicke der Flansche wesentlich geringer sein muß als die Breite der Stege, da nur so eine ausreichend gute Bildqualität erzielbar ist. Dabei wird man vorzugsweise mit U-Profil-Bauelementen arbeiten, bei denen die Flanschdicke höchstens etwa 1/10 der Stegbreite beträgt.

In der praktischen Anwendung wird man im Normalfall die U-Profil-Bauelemente so einbauen, daß ihre Flansche dem Projektor zugewandt sind. Damit ist die dem außerhalb des Gebäudes befindlichen Beobachter zugewandte Oberfläche der Durchlicht-Projektionswand leicht zu reinigen und ästhetisch ansprechend.

Mit der Erfindung ist es möglich, Durchlicht-Projektionswände mit praktisch beliebigen Flächenabmessungen aufzubauen. Durch die Verwendung einer Vielzahl von im Bereich ihrer Stege lichtstreuenden U-Profil-Bauelementen, die - wie bereits dargestellt - vorzugsweise aus Glas bestehen, wird gewährleistet, daß auch großflächige Projektionswände noch eine ausreichende Stabilität aufweisen können. Erfindungsgemäß ist es aufgrund der besonderen mechanischen Eigenschaften von U-Profil-Bauelementen sogar möglich, die lichtstreuenden Eigenschaften dadurch zu vermitteln, daß zumindest eine der Flächen der Stege sandgestrahlt wird.

Es liegt im Rahmen der Erfindung, U-Profil-Bauelemente zu verwenden, deren Stege aus einem lichtstreuenden Material bestehen. Die Lichtstreuwirkung kann dabei beispielsweise durch das Einbetten von sehr kleinen Teilchen mit von der Matrix abweichendem Brechungsindex, z.B. von Gasbläschen, in das Material des Steges erzielt werden. Vorzugsweise wird jedoch statt dessen zumindest eine der Flächen der Stege mit einer den optischen Eindruck einer sandgestrahlten Fläche vermittelnden Beschichtung versehen oder einer Mattierungsbehandlung unterzogen. Auf diese Weise ist es möglich, zur Kostenreduzierung für die Erstellung der Durchlicht-Projektionswände handelsübliche U-Profil-Bauelemente zu verwenden, die lediglich für den besonderen Einsatzzweck oberflächlich modifiziert werden. Dabei ist es von besonderem Vorteil, wenn die dem Projektor zugewandten Innenflächen der Stege lichtstreuende Eigenschaften aufweisen. Auf diese Weise ist die rauhe Oberfläche dem Gebäudeinneren zugewandt und somit besser vor Verschmutzungen geschützt als bei einer Anordnung auf der Außenseite.

Obwohl grundsätzlich anstelle einer Sandstrahlmattierung auch eine mattierende Ätzbehandlung möglich wäre, stehen dieser Umweltschutzbedenken entgegen. Eine ebenfalls grundsätzlich mögliche Schleifbehandlung würde einen hohen technischen Aufwand bedingen, da sie jedenfalls bei der Verwendung von Glas erst nach der Formung der U-Profil-Bauelemente vorgenommen werden könnte.

Daher besteht erfindungsgemäß eine weitere bevorzugte Alternative zu einer mechanischen Behandlung der Oberfläche(n) der Stege darin, lichtstreuend behandelte Trägermaterialien mit den Stegen zu verbinden. Diese Trägermaterialien können Folien oder dergleichen sein, in denen lichtstreuende Partikel eingelagert sind oder die mit einer Beschichtung aus lichtstreuenden Partikeln versehen sind.

Ganz besonders bevorzugt ist es allerdings, auf den Steg eine lichtstreuende Lackierung aufzubringen. Eine Lackierung hat den Vorteil, daß das Streuvermögen durch die Schichtdicke und/oder den Anteil der lichtstreuenden Partikel in der aufgetragenen Lackschicht in einfacher Weise reguliert werden kann. So kann auch das Problem einer gezielten und gegebenenfalls anwendungsspezifischen Einstellung der Lichtstreuwirkung auf einfache Weise gelöst werden. Besonders geeignet sind Lacke, die ein Mattierungsmittel auf Polyamidbasis und Kunststoffpulver mit einer Korngröße von 55 - 65 Mikrometer als lichtstreuende Partikel aufweisen, wie z.B. die farblosen Pehacryl-2K-Sandstrahleffektlacke der Firma Peter Lacke, Hiddenhausen, Deutschland.

Vor allem produktionstechnisch hat es Vorteile, wenn auch die Flanschen der U-Profil-Bauelemente zumindest bereichsweise lichtstreuende Eigenschaften aufweisen, insbesondere die gleiche Beschichtung aufweisen oder auf gleiche Weise behandelt wurden wie die Stege.

Im folgenden soll die Erfindung anhand einer bevorzugten Ausführungsform näher erläutert werden. Es zeigen
- Figur 1: in einer Prinzipdarstellung die Durchlicht-Projektionswand als Teil der Fassade eines Gebäudes, z.B. eines Großraumkinos;
- Figur 2: einen Teil einer aus senkrecht stehenden U-Profil-Bauelementen zusammengesetzten Durchlicht-Projektionswand;
- Figur 3: einen Querschnitt entlang der Linie A - A der Durchlicht-Projektionswand nach Fig. 2; und
- Figur 4: einen Querschnitt entlang der Linie B - B der Durchlicht-Projektionswand nach Fig. 2.

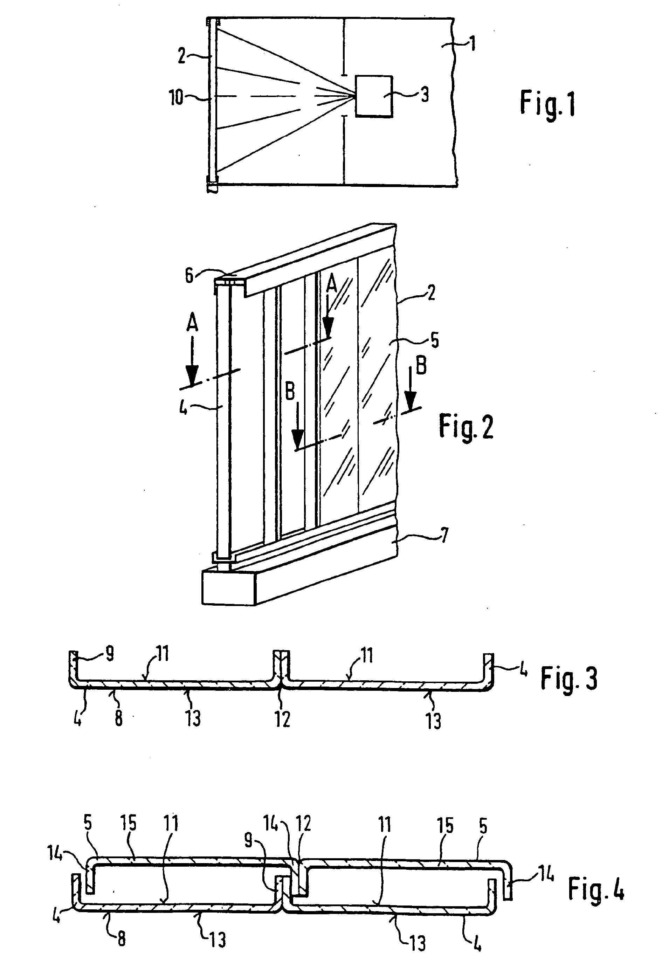

Fig. 1 zeigt eine horizontal und vertikal jeweils mehrere Meter messende Durchlicht-Projektionswand 2. Auf der von dieser Projektionswand 2 gebildeten Abbildungsfläche 10 können durch einen im Gebäude 1, z.B. einem Großraumkino, befindlichen Projektor 3 projizierte Steh- oder Laufbilder aus großer Distanz wahrgenommen werden. Es versteht sich, daß zur Projektion derartig großformatiger Bilder auf die Abbildungsfläche 10 von modernster Projektions- und Lichttechnik Gebrauch gemacht wird, um unverzerrte und kontrastreiche Bilder selbst bei Schrägprojektion zu erhalten.

Die nach Fig. 2 ausgeführte Durchlicht-Projektionswand 2 besteht aus eng nebeneinander angeordneten, sich vertikal erstreckenden U-Profil-Bauelementen 4, 5 in einschaliger Verlegung (linke Zeichnungshälfte) oder in doppelschaliger Verlegung (rechte Zeichnungshälfte). Sie wird in bekannter Weise unter Zwischenschaltung von nicht dargestellten Halteprofilen aus Kunststoff von einem Metallrahmen 6, 7 umfaßt und über handelsübliche Trageinrichtungen am Gebäude 1 fixiert. Andere Befestigungsmöglichkeiten sind denkbar und von der Erfindung umfaßt. Bei der Auswahl und Konzeption der Tragkonstruktion ist darauf zu achten, daß die für die Bildprojektion zur Verfügung stehende Abbildungsfläche 10 durch die Tragkonstruktion nicht mehr als nötig gemindert wird. Die U-Profil-Bauelemente 4 bestehen im dargestellten Ausführungsbeispiel aus Glas.

Die gemäß der linken Zeichnungshälfte der Figur 2 sowie der zugehörigen Figur 3 einschalig verlegten U-Profil-Bauelemente 4 der Durchlicht-Projektionswand 2 sind so ausgerichtet, daß ihre Flanschen 9 dem Projektor 3 zugewandt sind und daß die Innenflächen 11 der Stege 8 die Abbildungsfläche 10 bilden. Die Innenflächen 11 der Stege 8 sind für diesen Zweck mit einer den optischen Eindruck einer sandgestrahlten Fläche vermittelnden Beschichtung versehen (nicht dargestellt). Die Wirkung der Gesamtheit der Stege 8 der U-Profil-Bauelemente 4 als Abbildungsfläche 10 für ein vom Projektor 3 erzeugtes Bild beruht auf einer hinreichenden Lichtdurchlässigkeit und gleichzeitig guten Streuung des Lichtes durch die Beschichtung. Die optischen Eigenschaften werden durch bestimmte Zusätze erreicht, die beim Trocknen optische Effekte ähnlich einer Sandstrahlmattierung ergeben. Lichtstreuende Lackierungen, wie z.B. die farblosen Pehacryl-2K-Sandstrahleffektlacke der Firma Peter Lacke, Hiddenhausen, Deutschland, haben sich für diesen Zweck besonders bewährt. Alternativ oder zusätzlich könnte auch die dem Beobachter zugewandte Außenfläche 13 lichtstreuend ausgestaltet werden.

Eine Durchlicht-Projektionswand 2 aus doppelschalig verlegten U-Profil-Bauelementen 4, 5 mit paarweiser Anordnung der Flansche 9, 14 entsprechend der rechten Hälfte der Fig. 2 sowie der zugehörigen Figur 4 ist dann zu verwenden, wenn bessere Schalldämm- und Wärmedämmwerte und eine besonders hohe Festigkeit gegenüber Windlasten erreicht werden sollen. Die doppelschalige Verlegung ist insbesondere dann zu empfehlen, wenn besonders großflächige Durchlicht-Projektionswände 2 benötigt werden oder am Einsatzort mit einer besonders hohen Windbelastung zu rechnen ist. Die Qualitätseinbuße der projizierten Bilder durch die zwischen dem Projektor 3 und der Abbildungsfläche 10 angeordneten U-Profil-Bauelemente 5 kann vernachlässigbar klein gehalten werden, wenn deren Stege 15 lichtdurchlässig mit allenfalls geringer Lichtstreuwirkung gestaltet werden.

Die in den Fig. 3 und 4 dargestellten Fugen 12 zwischen den Flanschen 9, 14 benachbarter U-Profil-Bauelemente 4, 5 haben eine Breite von etwa 2 - 10 mm, vorzugsweise 2 - 4 mm. In der Regel wird als Fugenfüllmaterial zur mechanisch verbindenden Abdichtung zwischen den U-Profil-Bauelementen 4, 5 und zum Einbringen in die Rahmenkonstruktion 6, 7 handelsüblicher Silikonkautschuk verwendet, jedenfalls dann, wenn die U-Profil-Bauelemente 4, 5 aus Glas bestehen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Gebäude
- 2: Durchlicht-Projektionswand
- 3: Projektor
- 4: U-Profil-Bauelement
- 5: U-Profil-Bauelement
- 6: Oberer Metallrahmen
- 7: Unterer Metallrahmen
- 8: Steg
- 9: Flansch
- 10: Abbildungsfläche
- 11: Innenfläche des Stegs
- 12: Fuge
- 13: Außenfläche des Steges
- 14: Flansch
- 15: Steg

## Patentansprüche

1. System aus einer Durchlicht-Projektionswand (2) mit einer transluziden Abbildungsfläche (10) und einem Projektor (3), **dadurch gekennzeichnet, daß** die Abbildungsfläche (10) von lichtstreuende Eigenschaften aufweisenden Stegen (8) einer Vielzahl nebeneinander angeordneter U-Profil-Bauelemente (4) gebildet ist.

2. System nach Anspruch 1, **dadurch gekennzeichnet, daß** die dem Projektor (3) zugewandten Innenflächen (11) der Stege (8) lichtstreuende Eigenschaften aufweisen.

3. System nach Anspruch 1 oder 2, **dadurch gekennzeichnet, daß** die dem Projektor (3) zugewandten Innenflächen (11) und/oder die vom Projektor (3) abgewandten Außenflächen (13) des Steges (8) sandgestrahlt sind.

4. System nach Anspruch 1 oder 2, **dadurch gekennzeichnet, daß** die dem Projektor (3) zugewandten Innenflächen (11) und/oder die vom Projektor (3) abgewandten Außenflächen (13) der Stege (8) mit einer den optischen Eindruck einer sandgestrahlten Fläche vermittelnden Beschichtung versehen sind.

5. System nach Anspruch 4, **dadurch gekennzeichnet, daß** die Beschichtung ein lichtstreuende Eigenschaften aufweisendes Trägermaterial umfaßt.

6. System nach Anspruch 5, **dadurch gekennzeichnet, daß** das Trägermaterial eine Folie mit eingelagerten oder als Beschichtung aufgebrachten lichtstreuenden Partikeln ist.

7. System nach Anspruch 4, **dadurch gekennzeichnet, daß** die Beschichtung eine lichtstreuende Lackierung ist.

8. System nach einem der vorangehenden Ansprüche, **dadurch gekennzeichnet, daß** die U-Profil-Bauelemente (4) mit weiteren U-Profil-Bauelementen (5) in doppelschaliger Verlegung kombiniert sind.

9. System nach einem der vorangehenden Ansprüche, **dadurch gekennzeichnet, daß** die U-Profil-Bauelemente (4, 5) aus Glas bestehen.

10. System nach einem der vorangehenden Ansprüche, **dadurch gekennzeichnet, daß** die Flansche (9) der U-Profil-Bauelemente (4) dem Projektor (3) zugewandt sind.

11. System nach einem der vorangehenden Ansprüche, **dadurch gekennzeichnet, daß** die Flansche (9) der U-Profil-Bauelemente (4) zumindest bereichsweise lichtstreuende Eigenschaften aufweisen.

12. System nach Anspruch 11, **dadurch gekennzeichnet, daß** die Flansche der U-Profil-Bauelemente (4) die gleiche Beschichtung aufweisen oder auf gleiche Weise behandelt wurden wie die Stege (8).

13. Verfahren zum Sichtbarmachen eines von Steh- oder Laufbild-Projektoren erzeugten virtuellen Bildes, **gekennzeichnet durch** die Schritte:
Anordnen einer lichtdurchlässigen Abbildungsfläche (10) zwischen einem Projektor (3) und einem zukünftigen Zuschauer oder Betrachter, wobei die Abbildungsfläche (10) gebildet wird von Stegen (8), die **durch** eine Vielzahl an U-Profil-Bauelementen (4), die Seite an Seite angeordnet sind, wobei die Stege (8) lichtstreuende Eigenschaften aufweisen, gebildet werden; und
Projizieren eines Bildes auf die lichtdurchlässige Abbildungsfläche (10).

14. Verwendung einer Vielzahl nebeneinander angeordneter U-Profil-Bauelemente (4) für eine zwischen einem Projektor (3) und einem Beobachter angeordnete Durchlicht-Projektionswand (2) mit der Maßgabe, daß die Abbildungsfläche (10) der Durchlicht-Projektionswand (2) von lichtstreuende Eigenschaften aufweisenden Stegen (8) der U-Profil-Bauelemente (4) gebildet wird.

## Claims

1. System comprising a rear projection screen (2) with a translucent image-forming surface (10) and a projector (3), **characterized in that** the image-forming surface (10) is formed by bases (8), possessing light-diffusing properties, of a plurality of U-profiled construction elements (4) arranged side-by-side.

2. System according to Claim 1, **characterized in that** the inner surfaces (11) of the bases (8) facing towards the projector (3) possess light-diffusing properties.

3. System according to Claim 1 or 2, **characterized in that** the inner surfaces (11) facing towards the projector (3) and/or the outer surfaces (13) facing away from the projector (3) of the base (8) are sand-blasted.

4. System according to Claim 1 or 2, **characterized in that** the inner surfaces (11) facing towards the projector (3) and/or the outer surfaces (13) facing away from the projector (3) of the bases (8) are provided with a coating imparting the impression of a sand-blasted surface.

5. System according to Claim 4, **characterized in that** the coating comprises a substrate material possessing light-diffusing properties.

6. System according to Claim 5, **characterized in that** the substrate material is a film with light-diffusing particles embedded or applied as coating.

7. System according to Claim 4, **characterized in that** the coating is a light-diffusing varnish.

8. System according to any of the foregoing Claims, **characterized in that** the U-profiled construction elements (4) are combined with other U-profiled construction elements (5) laid in a double wall arrangement.

9. System according to any of the foregoing Claims, **characterized in that** the U-profiled construction elements (4, 5) consist of glass.

10. System according to any of the foregoing Claims, **characterized in that** the flanges (9) of the U-profiled construction elements (4) face towards the projector (3).

11. System according to any of the foregoing Claims, **characterized in that** the flanges (9) of the U-profiled construction elements (4) possess light-diffusing properties at least in some areas.

12. System according to Claim 11, **characterized in that** the flanges of the U-profiled construction elements (4) possess the same coating or have been treated in the same way as the bases (8).

13. Method of rendering visible a virtual image produced by still or motion picture projectors, **characterized by** the following steps:
Arranging a translucent image-forming surface (10) between a projector (3) and a future spectator or viewer, wherein the image-forming surface (10) is constituted by bases (8), provided by a plurality of U-profiled construction elements (4) arranged side-by-side, the bases (8) possessing light-diffusing properties; and
Projecting an image onto the translucent image-forming surface (10).

14. Use of a plurality of U-profiled construction elements (4) arranged side-by-side for a rear projection screen (2) arranged between a projector (3) and a viewer, with the provision that the image-forming surface (10) of the rear projection screen (2) is constituted by bases (8), possessing light-diffusing properties, of the U-profiled construction elements (4).

## Revendications

1. Système constitué d'un écran de rétroprojection (2), ayant une surface translucide (10) de formation d'image, et d'un projecteur (3), **caractérisé en ce que** la surface (10) de formation d'image est constituée des dos (8), présentant des propriétés de diffusion de la lumière, d'une pluralité de profilés en U (4) disposés les uns à côté des autres.

2. Système selon la revendication 1, **caractérisé en ce que** les surfaces intérieures (11) des dos (8) tournées vers le projecteur (3) présentent des propriétés de diffusion de la lumière.

3. Système selon la revendication 1 ou 2, **caractérisé en ce que** les surfaces intérieures (11) tournées vers le projecteur (3) et/ou les surfaces extérieures (13) des dos (8) tournées vers le côté opposé au projecteur (3) sont sablées.

4. Système selon la revendication 1 ou 2, **caractérisé en ce que** les surfaces intérieures (11) tournées vers le projecteur (3) et/ou les surfaces extérieures (13) des dos (8) tournées vers le côté opposé au projecteur (3) sont conçues avec un revêtement donnant l'impression optique d'une surface sablée.

5. Système selon la revendication 4, **caractérisé en ce que** le revêtement comporte un matériau de support présentant des propriétés de diffusion de lumière.

6. Système selon la revendication 5, **caractérisé en ce que** le matériau de support est une feuille ayant des particules diffusant la lumière incorporées ou appliquées sous forme de revêtement.

7. Système selon la revendication 4, **caractérisé en ce que** le revêtement est une peinture diffusant la lumière.

8. Système selon l'une quelconque des revendications précédentes, **caractérisé en ce que** les profilés en U (4) sont combinés avec d'autres profilés en U (5) en un agencement à double plateau.

9. Système selon l'une quelconque des revendications précédentes, **caractérisé en ce que** les profilés en U (4, 5) sont en verre.

10. Système selon l'une quelconque des revendications précédentes, **caractérisé en ce que** les rebords (9) des profilés en U (4) sont tournés vers le projecteur (3).

11. Système selon l'une quelconque des revendications précédentes, **caractérisé en ce que** les rebords (9) des profilés en U (4) présentent au moins sectoriellement des propriétés de diffusion de la lumière.

12. Système selon la revendication 11, **caractérisé en ce que** les rebords des profilés en U (4) comportent le même revêtement, ou sont traités de la même manière que les dos (8).

13. Procédé de visualisation d'une image virtuelle produite par projecteur à image fixe ou animée, **caractérisé en ce qu'**il comporte les étapes consistant à :
disposer une surface transparente (10) de formation d'image entre un projecteur (3) et un spectateur ou un observateur futur, la surface (10) de formation d'image étant formée de dos (8) d'une pluralité de profilés en U (4) disposés côte à côte, les dos (8) présentant des propriétés de diffusion de la lumière ; et
projeter une image sur la surface transparente (10) de formation d'image.

14. Utilisation d'une pluralité de profilés en U (4) disposés les uns à côté des autres pour un écran de rétroprojection (2) disposé entre un projecteur (3) et un spectateur, étant entendu que la surface (10) de formation d'image de l'écran de rétroprojection (2) est formée par les dos (8) de profilés en U (4) qui présentent des propriétés de diffusion de la lumière.
